# EUROPEAN PATENT APPLICATION

(11) **EP 4 064 014 A1**
(43) Date of publication of application: **28.09.2022**
(21) Application number: 21194258.6
(22) Date of filing: 01.09.2021
(51) Int. Cl.: G06F 3/0481, G06F 3/04817

(54) **INFORMATION PROCESSING APPARATUS, PROGRAM, AND INFORMATION PROCESSING METHOD**

(30) Priority: 26.03.2021 JP 2021052800
(71) Applicant: FUJIFILM Business Innovation Corp., Minato-ku Tokyo (JP)
(72) Inventor: TAKAHASHI, Kiyoshi, Yokohama-shi (JP); KIRIKAWA, Shota, Yokohama-shi (JP); TANIZAKI, Kosuke, Yokohama-shi (JP); OISHI, Kuniko, Yokohama-shi (JP); KOBAYASHI, Kazuhide, Yokohama-shi (JP)
(74) Representative: Becker, Eberhard

(57) **Abstract**

An information processing apparatus includes a processor configured to display an instruction image for accepting an instruction of a user on an operation screen for accepting an operation of the user, and in a case where the user performs an operation of instructing to display a confirmation image for confirming information related to the instruction image, determine one direction based on a distance from the instruction image to ends of the operation screen in an up-down direction and a right-left direction, and perform control so that the confirmation image is displayed in the one direction from a predetermined specific area on the instruction image.

## Description

### BACKGROUND OF THE INVENTION

### (i) Field of the Invention

The present invention relates to an information processing apparatus, a program, and an information processing method.

### (ii) Description of Related Art

JP4595807B describes an imaging apparatus including a control unit that controls to display a list of reduced images of a moving image, and a selection unit that selects the displayed reduced image, in which in a case of displaying the moving image corresponding to the reduced image selected by the selection unit in a size larger than the reduced image on a list display screen, the control unit controls a display position of the moving image so as not to interfere with display of the reduced image selected by the selection unit and a plurality of reduced images selectable by cursor moving.

### SUMMARY OF THE INVENTION

For an image displayed on the screen, there is a case where a confirmation image is required to be displayed for a user to confirm the image. As the confirmation image, for example, an enlarged thumbnail image obtained by enlarging a thumbnail image may be used to allow the user to confirm contents of a file corresponding to the thumbnail image. Further, as another confirmation image, for example, an image for displaying contents of a document corresponding to an icon image may be used to allow the user to confirm contents of a function corresponding to the icon image.

In a case of displaying the confirmation images of these images, for example, in a case where the confirmation image is always displayed in the same direction with respect to these images, an area in which the confirmation image is displayed becomes smaller depending on a position of the image, and visibility of the user is reduced, and it is difficult to perform a confirmation work, in some cases.

According to an aspect of the present disclosure, there is an information processing apparatus, a program, and an information processing method that suppress a decrease in visibility of a user for a confirmation image, as compared with a case where the confirmation image is always displayed in the same direction with respect to an image.

According to a first aspect of the present disclosure, there is provided an information processing apparatus including a processor configured to display an instruction image for accepting an instruction of a user on an operation screen for accepting an operation of the user, and in a case where the user performs an operation of instructing to display a confirmation image for confirming information related to the instruction image, determine one direction based on a distance from the instruction image to ends of the operation screen in an up-down direction and a right-left direction, and perform control so that the confirmation image is displayed in the one direction from a predetermined specific area on the instruction image.

According to a second aspect of the present disclosure, in the information processing apparatus according to the first aspect, the processor may be configured to perform control so that the entire confirmation image is displayed in an area from the specific area to the end in the one direction.

According to a third aspect of the present disclosure, in the information processing apparatus according to the first or second aspect, the one direction may be a direction toward one end at which a distance from the instruction image to the end of the operation screen in the up-down direction and the right-left direction has a largest value.

According to a fourth aspect of the present disclosure, in the information processing apparatus according to the second aspect, the processor may be configured to perform control so that the confirmation image is displayed in a largest size in the area from the specific area to the end in the one direction.

According to a fifth aspect of the present disclosure, in the information processing apparatus according to the first or second aspect, the processor may be configured to control a size for displaying the confirmation image by using a size of a prototype image that is a prototype of the confirmation image, as an upper limit.

According to a sixth aspect of the present disclosure, in the information processing apparatus according to the first or second aspect, the processor may be configured to determine a position for displaying the confirmation image based on a position of the specific area on the operation screen.

According to a seventh aspect of the present disclosure, in the information processing apparatus according to the sixth aspect, the processor may be configured to perform control so that the confirmation image is displayed closer to the specific area.

According to an eighth aspect of the present disclosure, in the information processing apparatus according to the sixth aspect, the processor may be configured to display the confirmation image closer to an end at which a distance to the specific area is closer, among the ends of the operation screen in a direction orthogonal to the one direction.

According to a ninth aspect of the present disclosure, in the information processing apparatus according to any one of the sixth to eighth aspects, the processor may be configured to perform control so that the confirmation image is displayed to be superimposed on at least a part of the instruction image.

According to a tenth aspect of the present disclosure, in the information processing apparatus according to the first or second aspect, the processor may be configured to in a case where the user performs a predetermined operation, perform control so that the confirmation image is in a display maintenance state in which the display of the confirmation image is maintained, and in the display maintenance state, even in a case where a position of the instruction image is changed, perform control so that a size and a position of the confirmation image are not changed.

According to an eleventh aspect of the present disclosure, in the information processing apparatus according to the first or second aspect, the processor may be configured to display a specific image that does not completely cover the instruction image on the instruction image in correspondence with the specific area.

According to a twelfth aspect of the present disclosure, in the information processing apparatus according to the eleventh aspect, the processor may be configured to determine the one direction based on a distance from a predetermined reference position on the instruction image to the ends of the operation screen in the up-down direction and the right-left direction, and the reference position may be present in the specific area.

According to a thirteenth aspect of the present disclosure, in the information processing apparatus according to the first or second aspect, the specific area may be an area in which the instruction image is displayed.

According to a fourteenth aspect of the present disclosure, there is provided a program causing a computer to realize a function of display an instruction image on an operation screen for accepting an operation by a user, and a function of determining, in a case where the user performs an operation of instructing to display a confirmation image for confirming information related to the instruction image, one direction based on a distance from the instruction image to ends of the operation screen in an up-down direction and a right-left direction, and performing control so that the confirmation image is displayed in the one direction from a predetermined specific area on the instruction image.

According to a fifteenth aspect of the present disclosure, there is provided an information processing method including displaying an instruction image for accepting an instruction of a user on an operation screen for accepting an operation of the user, and determining, in a case where the user performs an operation of instructing to display a confirmation image for confirming information related to the instruction image, one direction based on a distance from the instruction image to ends of the operation screen in an up-down direction and a right-left direction, and performing control so that the confirmation image is displayed in the one direction from a predetermined specific area on the instruction image.

According to the first aspect of the present disclosure, as compared with a case where the confirmation image is always displayed in the same direction with respect to the image, a decrease in visibility of the user for the confirmation image is suppressed.

According to the second aspect of the present disclosure, as compared with a case where only a part of the confirmation image is displayed, a decrease in visibility of the user for the confirmation image is suppressed.

According to the third aspect of the present disclosure, as compared with a case where the confirmation image is displayed in a direction other than a direction to an end having the largest distance, it is possible to increase a display area to be secured for displaying the confirmation image.

According to the fourth aspect of the present disclosure, as compared with a case where the confirmation image is displayed smaller than the maximum size that can be displayed, visibility of the user for the confirmation image is improved.

According to the fifth aspect of the present disclosure, it is possible to suppress unnecessary expansion.

According to the sixth aspect of the present disclosure, as compared with a case where the confirmation image is displayed regardless of the positions of the instruction image and the specific area, the user can easily grasp a correspondence between the instruction image and the confirmation image.

According to the seventh aspect of the present disclosure, as compared with a case where the confirmation image is displayed not to be close to the instruction image and the specific area, the user can easily grasp a correspondence between the instruction image and the confirmation image.

According to the eighth aspect of the present disclosure, as compared with a case where the confirmation image is displayed not to be close to the end at which a distance to the specific area is short, the user can easily grasp a correspondence between the instruction image and the confirmation image.

According to the ninth aspect of the present disclosure, as compared with a case where the confirmation image is displayed not to be superimposed on the instruction image, it is possible to increase a display area to be secured for displaying the confirmation image.

According to the tenth aspect of the present disclosure, as compared with a case where the direction in which the confirmation image is displayed is changed in a case where the position of the instruction image is changed, it is possible to prevent the screen display from becoming complicated.

According to the eleventh aspect of the present disclosure, as compared with a case where the specific image is not displayed, the user can easily predict the position and the size of the confirmation image to be displayed.

According to the twelfth aspect of the present disclosure, as compared with a case where the specific image is not displayed, the user can easily predict the position and the size of the confirmation image to be displayed.

According to the thirteenth aspect of the present disclosure, as compared with a case where the reference position is provided at a location different from the specific area, the user can easily predict the position and the size of the confirmation image to be displayed.

According to the fourteen aspect of the present disclosure, as compared with a case where the confirmation image is always displayed in the same direction with respect to the image, a decrease in visibility of the user for the confirmation image is suppressed.

According to the fifteenth aspect of the present disclosure, as compared with a case where the confirmation image is always displayed in the same direction with respect to the image, a decrease in visibility of the user for the confirmation image is suppressed.

### BRIEF DESCRIPTION OF THE DRAWINGS

Exemplary embodiment(s) of the present invention will be described in detail based on the following figures, wherein:
Fig. 1 is a diagram illustrating an example of a hardware configuration of an image display apparatus to which the present exemplary embodiment is applied;
Fig. 2 is a diagram illustrating an example of an operation screen;
Fig. 3 is a block diagram illustrating an example of a functional configuration of the image display apparatus;
Fig. 4 is a flowchart illustrating an example of a processing procedure of displaying a confirmation image;
Figs. 5A and 5B are diagrams illustrating an example of displaying an operation screen 400, Fig. 5A illustrates a state before a document icon is designated, and Fig. 5B illustrates a state in which a display instruction button is designated;
Figs. 6A and 6B are diagrams illustrating a procedure of determining a size for displaying the confirmation image, Fig. 6A is an example in which a display area is secured from a specific area in a right direction, and Fig. 6B is an example in which the display area is secured from the specific area in a downward direction;
Figs. 7A and 7B are diagrams illustrating a procedure of determining a position for displaying the confirmation image in a case where a margin is generated in a direction parallel to one direction with respect to the confirmation image, Fig. 7A is an example in which the one direction is the right direction and the margin is generated in a right-left direction of the confirmation image, and Fig. 7B is an example in which the one direction is a downward direction and the margin is generated in an up-down direction of the confirmation image;
Figs. 8A and 8B are diagrams illustrating another procedure of determining the position for displaying the confirmation image in a case where a margin is generated in a direction orthogonal to one direction with respect to the confirmation image, Fig. 8A is an example in which the one direction is the right direction and the margin is generated in the up-down direction of the confirmation image, and Fig. 8B is an example in which the one direction is a downward direction and the margin is generated in the right-left direction of the confirmation image;
Fig. 9 is an example in which the confirmation image is displayed to be superimposed on a part of the document icon;
Fig. 10 is a diagram illustrating a display maintenance state;
Fig. 11 is a diagram illustrating a procedure of determining the one direction;
Fig. 12 is a flowchart illustrating an example of a processing procedure of determining the one direction;
Fig. 13 is a diagram illustrating Modification Example 1 of the procedure of determining the one direction; and
Fig. 14 is a diagram illustrating Modification Example 2 of the procedure of determining the one direction.

### DETAILED DESCRIPTION OF THE INVENTION

Hereinafter, exemplary embodiments of the present invention will be described with reference to drawings.

### [Hardware Configuration of Image Display Apparatus 1]

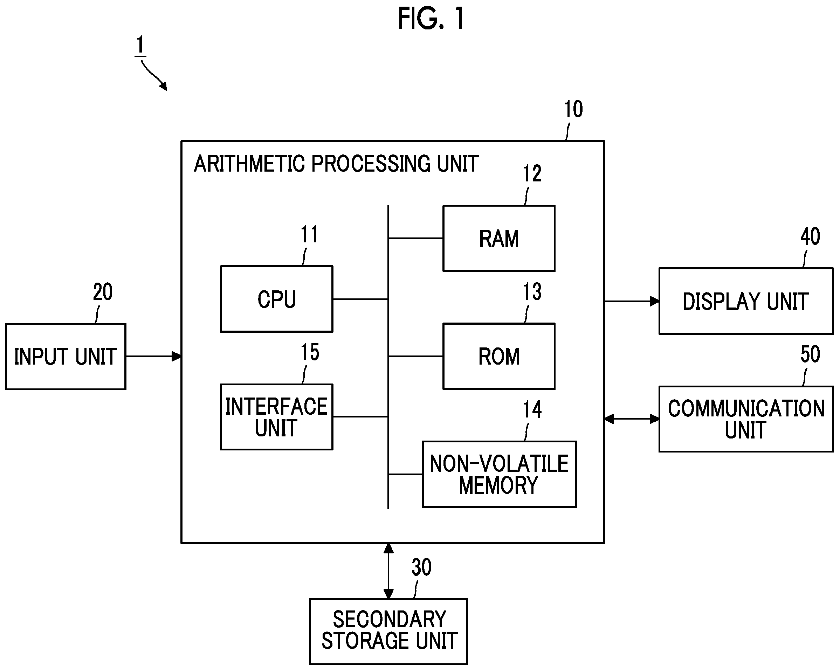

Fig. 1 is a diagram illustrating an example of a hardware configuration of an image display apparatus 1 to which the present exemplary embodiment is applied.

As illustrated in Fig. 1, the image display apparatus 1 according to the present exemplary embodiment functions as an example of an information processing apparatus, and includes an arithmetic processing unit 10 that executes a digital arithmetic process according to a predetermined processing program in a case of displaying a screen, an input unit 20 that accepts an input operation from a user, a secondary storage unit 30 that is realized by a hard disk drive (HDD), a display unit 40 that consists of a liquid crystal display panel, an organic electro luminescence (EL) display panel, or the like which displays an image, text information, or the like to the user, and a communication unit 50 which transmits and receives data via a network.

The arithmetic processing unit 10 includes a central processing unit (CPU) 11 that controls the entire apparatus, as an example of a processor, a random access memory (RAM) 12 to be used as a working memory of the CPU 11, a read only memory (ROM) 13 that stores an image display processing program or the like executed by the CPU 11, a non-volatile memory 14 such as a static RAM (SRAM), a flash memory, or the like backed up by battery, that is rewritable and can hold data even in a case where power supply is interrupted, and an interface unit 15 that controls each unit such as the input unit 20 connected to the arithmetic processing unit 10. Image information such as thumbnail images (described below) displayed on the display unit 40 is stored in the non-volatile memory 14.

In addition to storing image data and the like, the secondary storage unit 30 also stores an image display processing program to be executed by the arithmetic processing unit 10, and the arithmetic processing unit 10 reads the image display processing program to execute each process of the image display apparatus 1 according to the present exemplary embodiment.

Here, the program executed by the CPU 11, which is an example of a processor, is provided to the arithmetic processing unit 10 in a state of being stored in a computer-readable recording medium such as a magnetic recording medium (a magnetic tape, a magnetic disk, or the like), an optical recording medium (an optical disk, or the like), an optical magnetic recording medium, a semiconductor memory, or the like. Further, the program executed by the CPU 11 may be downloaded to the image display apparatus 1 by using a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The input unit 20 is an apparatus such as a pointing device by which the user inputs an operation.

For example, in a case where the input unit 20 is a mouse or the like, the user can designate a position on a screen of the display unit 40, a displayed image, or the like by performing a cursor movement operation or a click operation.

Further, in a case where the input unit 20 is a touch panel or the like, the user can designate a position on a screen or a displayed image by performing an operation of touching the touch panel with a finger or the like or an operation of maintaining the touched state of the finger or the like for a longer time than a predetermined time. In this case, the input unit 20 is provided integrally with the display unit 40.

In addition to the apparatus such as the pointing device described above, a keyboard or the like for performing a key input operation may be provided as the input unit 20.

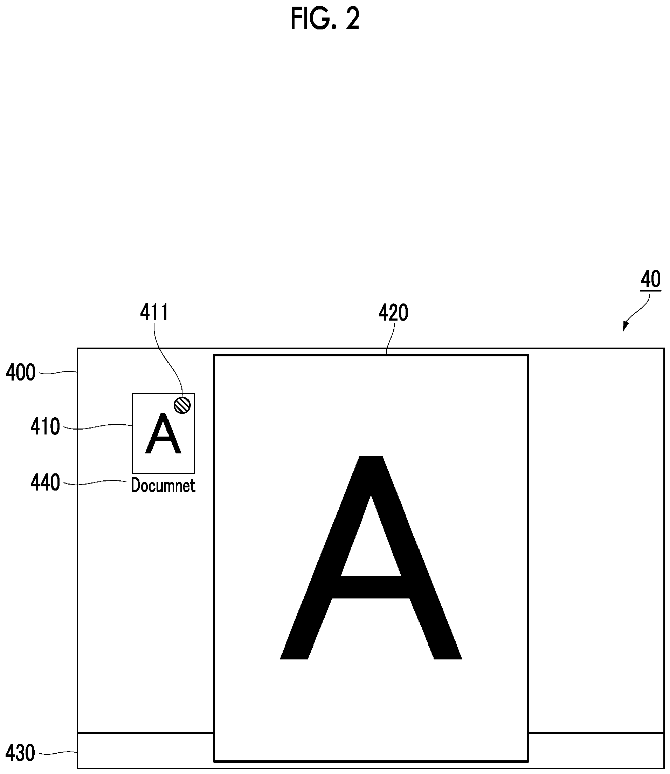

Fig. 2 is a diagram illustrating an example of an operation screen of the image display apparatus 1 to which the present exemplary embodiment is applied.

The display unit 40 displays an operation screen 400, which is a screen for accepting an operation by the user, as illustrated in Fig. 2. In other words, the operation screen 400 is an area in which an instruction image and the like for accepting an operation of the user are arranged. The document may include an image in addition to a text, or may include only an image without including the text.

On the operation screen 400, in addition to a document icon 410, a display instruction button 411, a confirmation image 420, a toolbar 430, and the like are displayed.

The document icon 410 is an example of an instruction image for accepting an instruction of the user. The instruction of the user includes selecting, browsing, moving a storage location, moving a display location of an instruction image, and the like for a document. Further, the display instruction button 411 is an image for giving an instruction related to display of the confirmation image 420. The confirmation image 420 is an image for allowing the user to confirm a content of the document related to the instruction image such as the document icon 410. The toolbar 430 is a collection of instruction units prepared to simplify operations on electronic documents by the user. Examples of the operation for this electronic document include operations of saving, printing, rotating, searching for, and encrypting the electronic document, an operation of bundling two or more electronic documents, and the like.

In the present exemplary embodiment, a size of the operation screen 400 on the display unit 40 can be changed by an operation of the user. Further, it is also possible to obtain a rectangular shape with an aspect ratio different from Fig. 2, by changing a shape of the operation screen 400 by the operation of the user.

The document icon 410 is an instruction image for accepting an instruction of the user on the document. The document icon 410 may be a thumbnail image for checking at least a part of a content of a file managed by file handling software. This thumbnail image is simply displayed as a reduced image of the original image, for example, in a case where the corresponding file is image data. In a case where the corresponding file is document data having a plurality of pages, a representative page such as the first page is displayed as the reduced image. The document icon 410 displayed as a thumbnail image functions as an icon for opening the corresponding file, for example.

In a case where a document displayed as a thumbnail image consists of a plurality of pages, an image (not illustrated) for accepting a change of the display page from the user may be displayed in a state of being associated with the document icon 410. In the present exemplary embodiment, the "page" is a set of pieces of data displayed as one surface on the operation screen 400 at a time.

The document icon 410 may be a tray used for the user to deliver an electronic document to a third party, a folder used for storing the electronic document, an electronic document, or the like represented by a pictogram.

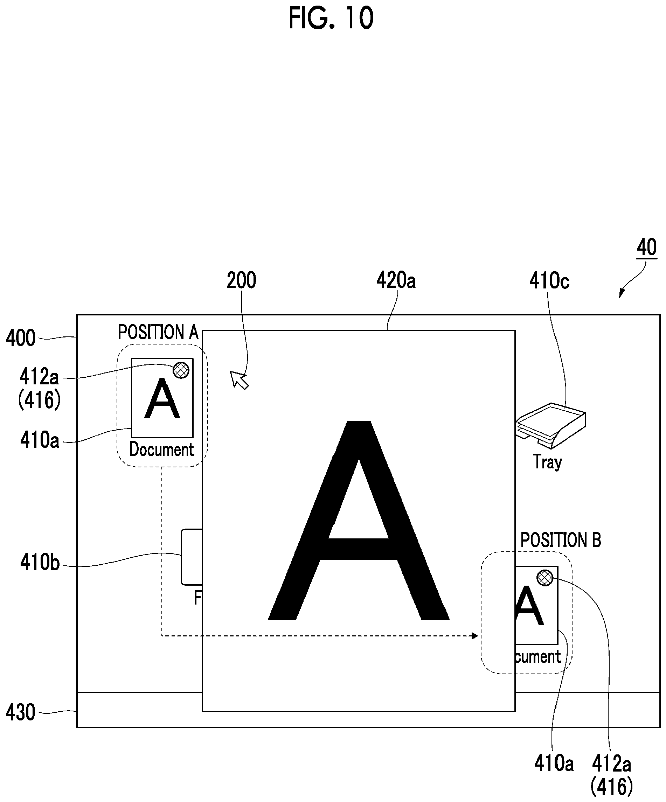

The display instruction button 411 is an image for accepting an operation instructing display of the confirmation image 420 by the user, and is an example of an instruction button that is an image for accepting an instruction related to the display of the confirmation image 420. This instruction button is displayed in a state of being associated with the document icon 410. Further, instead of the display instruction button 411 illustrated in Fig. 2, a maintenance instruction button (which will be described below with reference to Fig. 10) corresponding to an instruction to put the confirmation image 420 in a display maintenance state may be displayed.

In the present exemplary embodiment, the display instruction button 411 and a maintenance instruction button 412 are displayed so as to be superimposed on an upper right corner portion of the document icon 410. In this case, it is preferable that the display instruction button 411 and the maintenance instruction button 412 are displayed so as not to reduce visibility of the document icon 410, for example. For example, the display instruction button 411 is displayed to be smaller than the document icon 410. Further, the display instruction button 411 is displayed semi-transparently so that a superimposed portion on the document icon 410 can be seen through.

The confirmation image 420 is an image for allowing the user to confirm a content of the instruction image. The confirmation image 420 is displayed without starting a new program in a case where the user performs an operation to instruct the display. In the example in Fig. 2, an enlarged image of a thumbnail image of the document is displayed as the confirmation image 420 for confirming the content of the document corresponding to the document icon 410. A resolution of the thumbnail image displayed as the confirmation image 420 may be higher than a resolution of the thumbnail image displayed as the document icon 410.

In addition, as illustrated in Fig. 2, a text 440 such as a name of a file or a function corresponding to the document icon 410 may be displayed in association with each image, on the operation screen 400. Further, the text 440 may be displayed in association with the confirmation image 420.

### [Functional Configuration of Image Display Apparatus 1]

Next, a functional configuration of the image display apparatus 1 will be described.

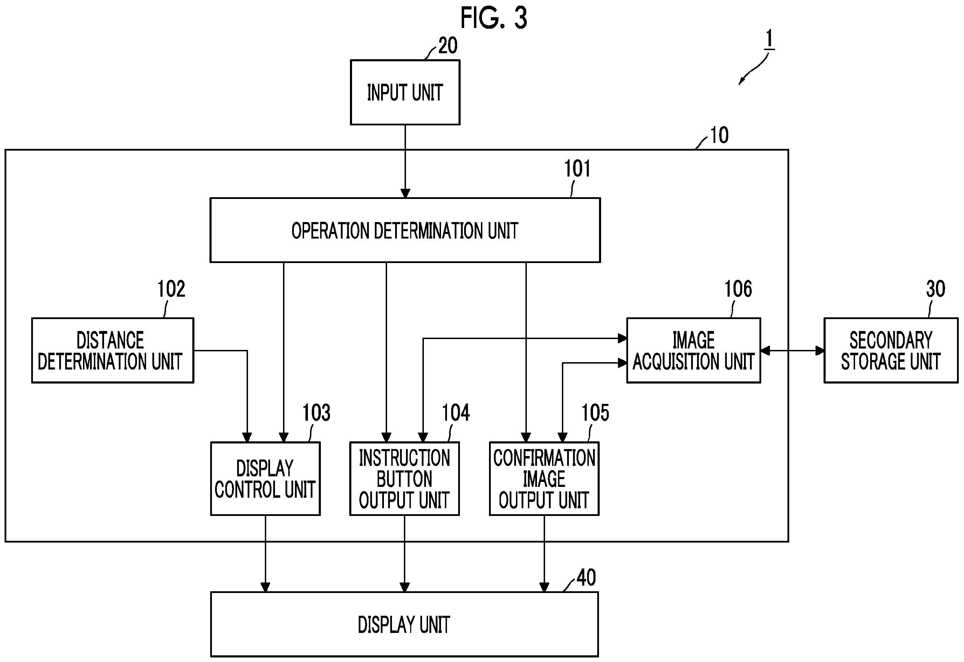

Fig. 3 is a block diagram illustrating an example of the functional configuration of the image display apparatus 1. As illustrated in Fig. 3, the image display apparatus 1 includes an operation determination unit 101 that determines whether or not an operation is performed by the user, a distance determination unit 102 that determines a distance between two points on the screen of the display unit 40, a display control unit 103 that controls contents to be displayed on the display unit 40, an instruction button output unit 104 that outputs an instruction button to the display unit 40, a confirmation image output unit 105 that outputs the confirmation image 420 corresponding to an instruction image to the display unit 40, and an image acquisition unit 106 that acquires an image to be output to the display unit 40.

The operation determination unit 101 determines whether or not a user operation is performed via the input unit 20 on the operation screen 400 (see Fig. 2) . The user operation is, for example, an operation of designating an image, an icon, a position, or the like on the operation screen 400, a scroll operation, a key input operation, or the like.

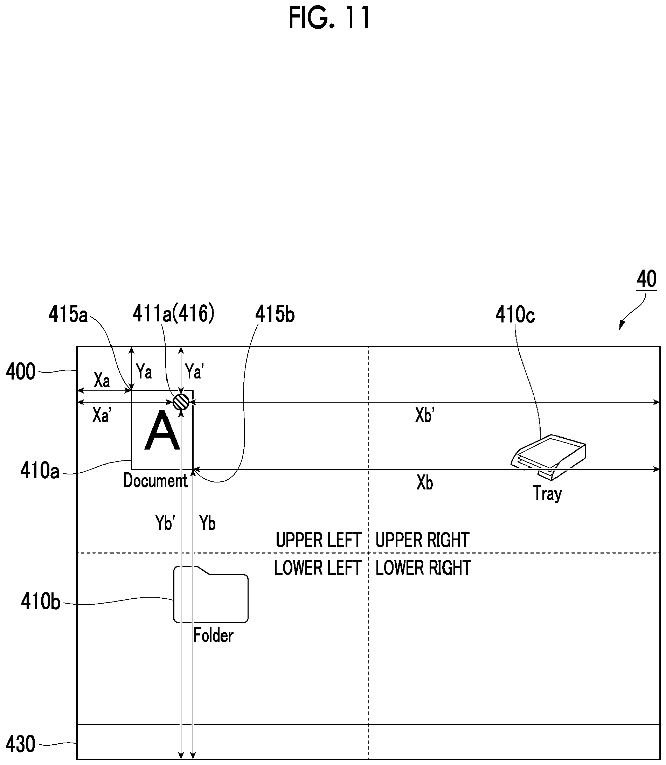

The distance determination unit 102 determines a distance from the instruction image (see Fig. 2) such as the document icon 410 displayed on the operation screen 400 to an end of the operation screen 400 in an up-down direction and a right-left direction. More specifically, a distance from each side of the instruction image in the up-down direction and right-left direction, a predetermined specific area on the instruction image, a reference position predetermined on the instruction image, or the like to the end of the operation screen 400 in the up-down direction and right-left direction is determined. Details of the specific area and the reference position will be described below with reference to Fig. 11.

Further, the distance determination unit 102 according to the present exemplary embodiment determines a position of the instruction image on the operation screen 400, based on the distances from the instruction image to the end in the up-down direction and right-left direction

The display control unit 103 controls a display mode of the document icon 410, the confirmation image 420, the toolbar 430 (see Fig. 2), or the like based on a content determined by the operation determination unit 101 and the distance determination unit 102. The display control unit 103 controls a position at which the document icon 410 is displayed, for example, based on the content determined by the operation determination unit 101. Further, for example, a position and a size in which the confirmation image 420 is displayed are controlled based on the content determined by the distance determination unit 102.

Further, the display control unit 103 controls to display an image captured by the image acquisition unit 106 as the instruction image. For example, a thumbnail image is taken from the image acquisition unit 106, and controlled to be displayed as the document icon 410 for opening the corresponding file.

The instruction button output unit 104 outputs an instruction button for giving an instruction related to display of the confirmation image 420, such as the display instruction button 411 for giving an instruction to display the confirmation image 420 or the maintenance instruction button 412 for giving an instruction to maintain the display of the confirmation image 420, to the display unit 40. This instruction button is displayed in a state of being associated with an instruction image such as the document icon 410.

The confirmation image output unit 105 takes out the confirmation image 420 acquired by the image acquisition unit 106, based on the determination of the operation determination unit 101 that the display of the confirmation image 420 is instructed. The confirmation image output unit 105 outputs the confirmation image 420 corresponding to the document icon 410 instructed by the user to the display unit 40 without starting a new program.

The image acquisition unit 106 acquires an image to be displayed on the display unit 40, such as an instruction image such as a document icon 410 or another icon, an instruction button output by the instruction button output unit 104, a confirmation image 420 output by the confirmation image output unit 105, and the like. For example, a thumbnail image is generated and acquired as the document icon 410, based on the document stored in the secondary storage unit 30. Further, for example, an image already stored in the secondary storage unit 30 is taken out and acquired as the confirmation image 420.

The image acquired by the image acquisition unit 106 is stored in a state of being taken out as the instruction image, the instruction button, and the confirmation image 420. The function of storing this image is realized by the non-volatile memory 14 (see Fig. 1).

### [Display of Confirmation Image]

A process in a case of displaying the confirmation image 420 will be described with reference to Figs. 3 to 10.

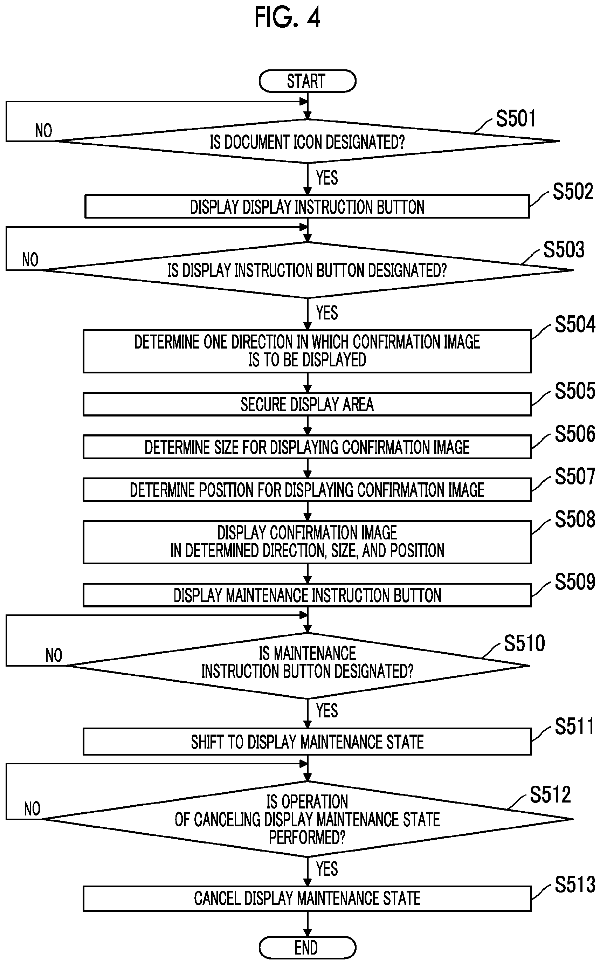

Fig. 4 is a flowchart illustrating an example of a processing procedure of displaying a confirmation image 420a.

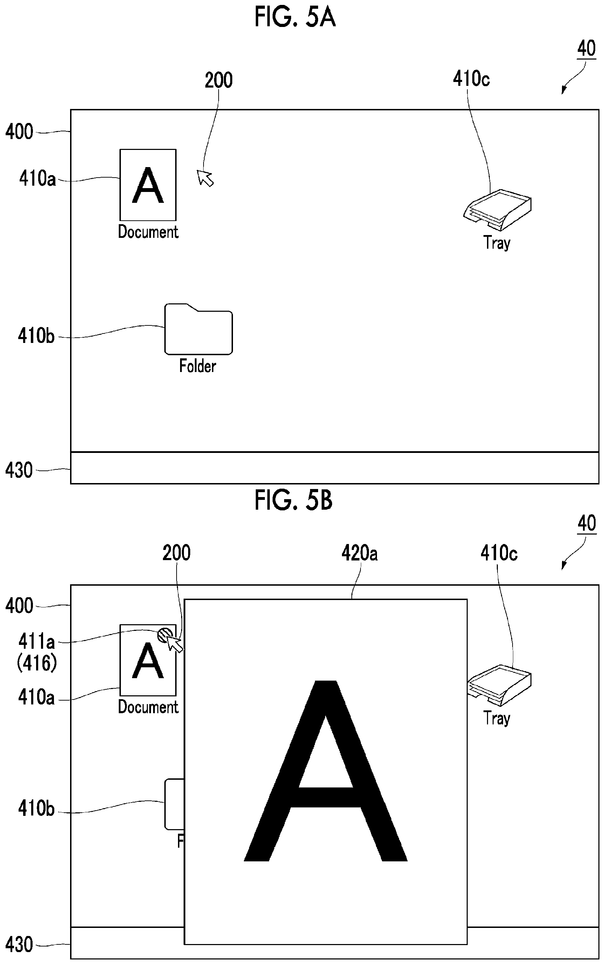

Figs. 5A and 5B are diagrams illustrating an example of displaying the operation screen 400, Fig. 5A illustrates a state before a document icon 410a is designated, and Fig. 5B illustrates a state in which a display instruction button 411a is designated.

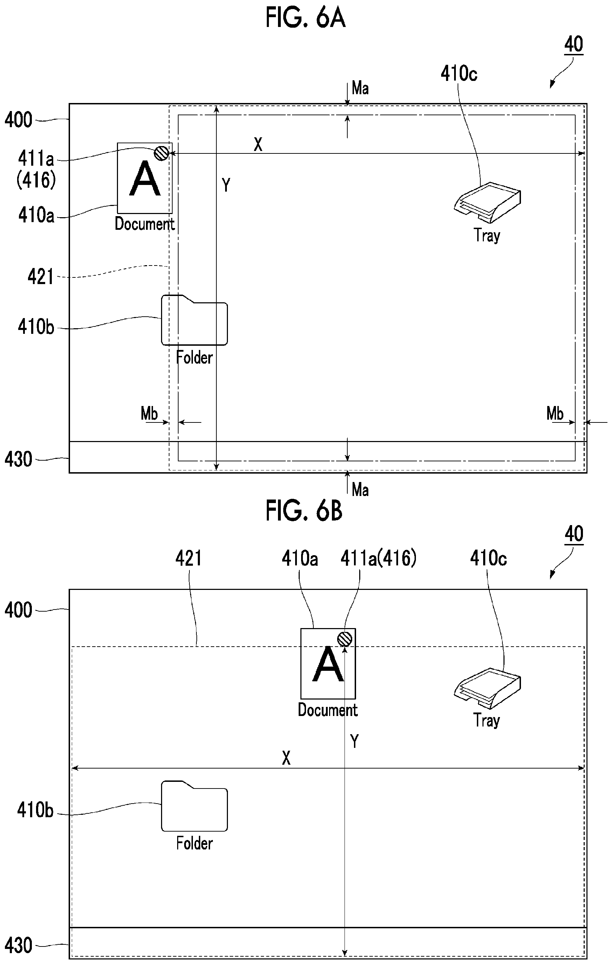

Figs. 6A and 6B are diagrams illustrating a procedure of determining a size for displaying the confirmation image 420a, Fig. 6A is an example in which a display area 421 is secured from a specific area 416 in a right direction, and Fig. 6B is an example in which the display area 421 is secured from the specific area 416 in a downward direction.

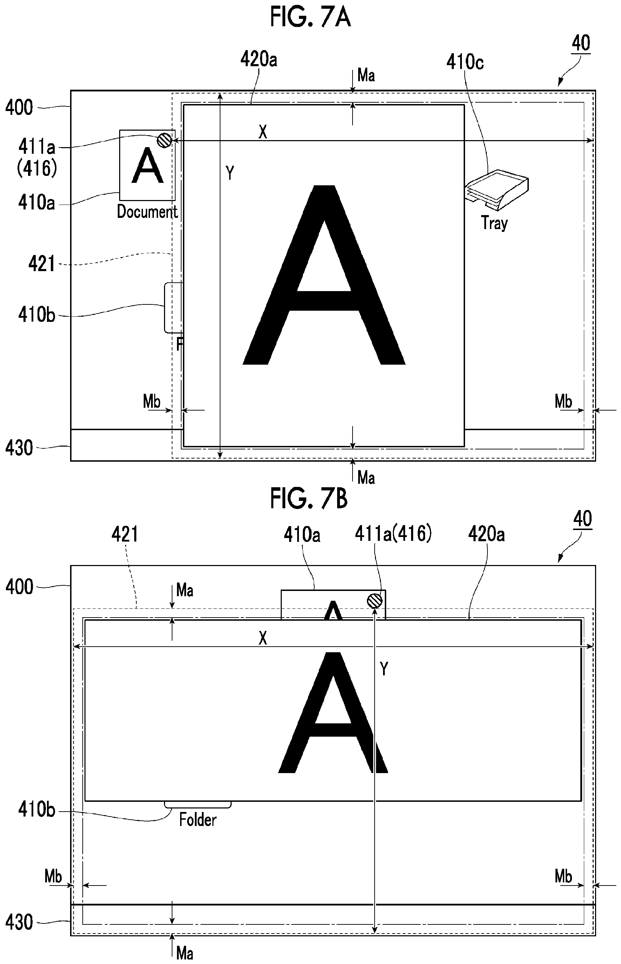

Further, Figs. 7A and 7B are diagrams illustrating a procedure of determining a position for displaying the confirmation image 420a in a case where a margin is generated in a direction parallel to one direction with respect to the confirmation image 420a, Fig. 7A is an example in which the one direction is the right direction and the margin is generated in a right-left direction of the confirmation image 420a, and Fig. 7B is an example in which the one direction is a downward direction and the margin is generated in the up-down direction of the confirmation image 420a.

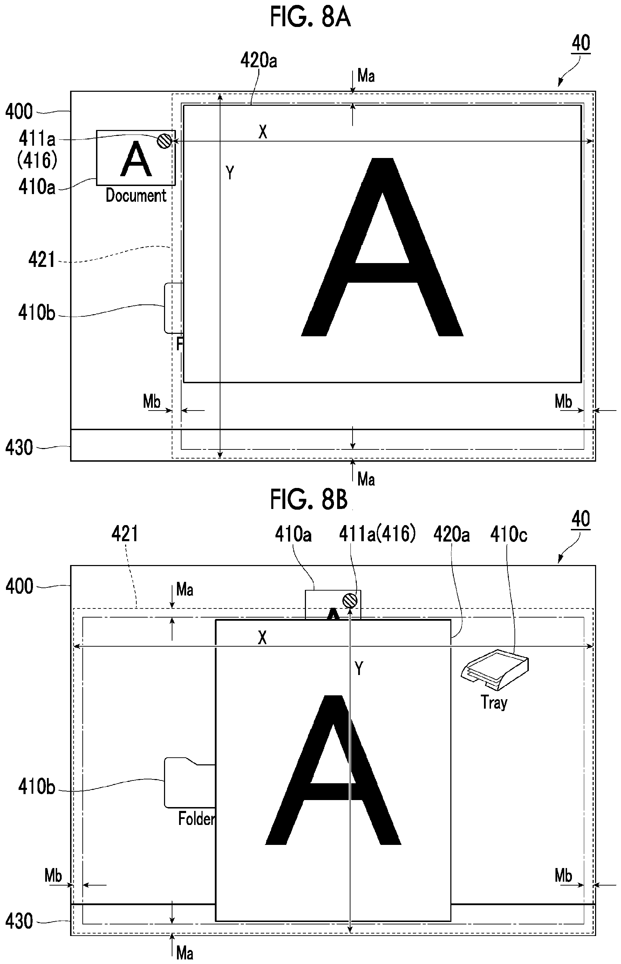

Figs. 8A and 8B are diagrams illustrating another procedure of determining the position for displaying the confirmation image 420a in a case where a margin is generated in a direction orthogonal to one direction with respect to the confirmation image 420a, Fig. 8A is an example in which the one direction is the right direction and the margin is generated in the up-down direction of the confirmation image 420a, and Fig. 8B is an example in which the one direction is a downward direction and the margin is generated in the right-left direction of the confirmation image 420a.

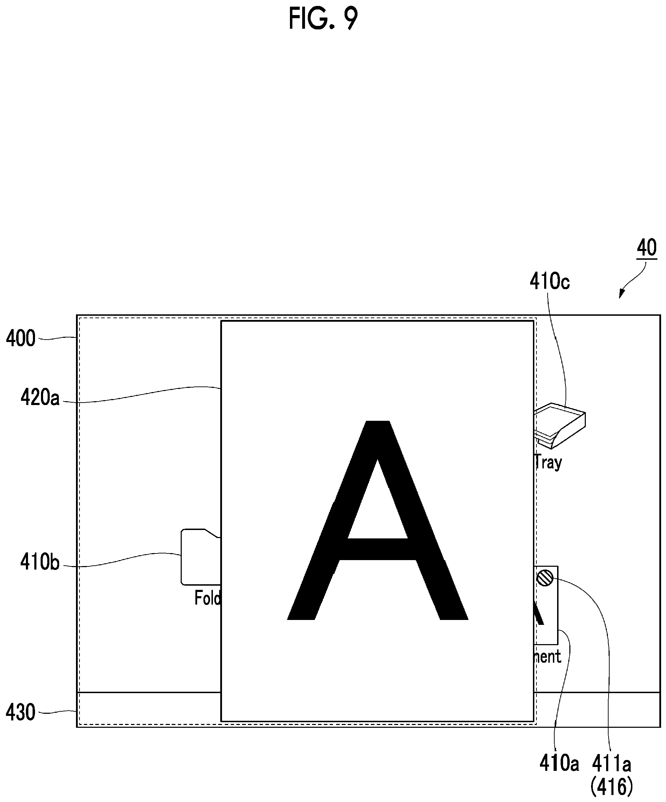

Fig. 9 is an example in which the confirmation image 420a is displayed to be superimposed on a part of the document icon 410a.

Fig. 10 is a diagram illustrating a display maintenance state in which display of the confirmation image 420a is maintained.

As illustrated in Figs. 5A and 5B, the display unit 40 according to the present exemplary embodiment displays a cursor 200 which indicates a position on the screen, an image, or the like, on the operation screen 400. The cursor 200 is moved by an operation of the user input via the input unit 20, and is displayed so as to point to the position, the image, or the like on the screen designated by the user.

The document icons 410 (410a, 410b, and 410c) and the toolbar 430 are displayed on the operation screen 400.

The display instruction button 411a illustrated in Fig. 5B is an image for accepting an instruction for displaying the confirmation image 420a by the user. Further, the specific area 416 illustrated in Figs. 5B to 10 is a predetermined area on the document icon 410a, which is less than an area in which the document icon 410a is displayed. In the present exemplary embodiment, the display instruction button 411a or a maintenance instruction button 412a is an example of a specific image displayed corresponding to the specific area 416. Since the display instruction button 411a and the maintenance instruction button 412a correspond to the specific area 416 smaller than the document icon 410a, the document icon 410a is not completely covered.

Further, the display area 421 illustrated in Figs. 6A to 9 is an area secured for displaying the confirmation image 420a, and is located in any direction of the up-down direction and the right-left direction with respect to the specific area 416. By displaying the confirmation image 420a in the secured display area 421, the confirmation image 420a is displayed in any direction of the up-down direction and the right-left direction with respect to the specific area 416. The confirmation image 420a does not have to be displayed over the entire display area 421. Here, the fact that the confirmation image 420a is displayed in one direction with respect to the specific area 416 means that the confirmation image 420a is located so that at least a part of the specific area 416 is not superimposed on the confirmation image 420a in a direction opposite to the one direction with respect to the confirmation image 420a. For example, in a case where the confirmation image 420a is displayed in a right direction with respect to the specific area 416, at least a part of the specific area 416 is located in the left direction of the confirmation image 420a not to be superimposed on the confirmation image 420a. Since the specific area 416 is a predetermined area on the document icon 410a, the document icon 410a is displayed so that at least a part of the document icon 410a is not superimposed on the confirmation image 420a.

The maintenance instruction button 412a illustrated in Fig. 10 is an image for accepting an instruction of the user who maintains the display of the confirmation image 420a. The maintenance instruction button 412a is displayed at a position at which, for example, the display instruction button 411a is displayed in a case where the display instruction button 411a is designated and the confirmation image 420a is displayed. A state in which the display of the confirmation image 420a is maintained by an operation of the user such as the instruction to the maintenance instruction button 412a is defined as the display maintenance state.

Next, the description is continued with reference to the flowchart illustrated in Fig. 4.

First, the operation determination unit 101 illustrated in Fig. 3 determines whether or not any of the document icons 410 is designated based on an operation via the input unit 20 (step S501). In the present exemplary embodiment, the operation determination unit 101 determines the operation of moving the cursor 200 so as to indicate any of the document icons 410, as designation of the document icon 410. For example, a mouse over operation or the like of locating the cursor 200 over the document icon 410 is determined as the designation of the document icon 410. In the example in Fig. 5A, since the cursor 200 is not located over any of the document icons 410, it is determined that the document icon 410 is not designated.

In a case where the document icon 410 is not designated in step S501 (NO in step S501), the process waits until the document icon is designated. In a case where the document icon 410 is designated (YES in step S501), the instruction button output unit 104 outputs and displays the display instruction button 411 (step S502). For example, in a case where there is a mouse over operation of locating the cursor 200 over the document icon 410a illustrated in Fig. 5A, the display instruction button 411a is displayed as illustrated in Fig. 5B (step S502).

Next, the operation determination unit 101 determines whether or not the display instruction button 411a is designated based on an operation via the input unit 20 (step S503) . The operation determination unit 101 according to the present exemplary embodiment determines, for example, that a mouse over operation on the display instruction button 411a is the designation on the display instruction button 411a.

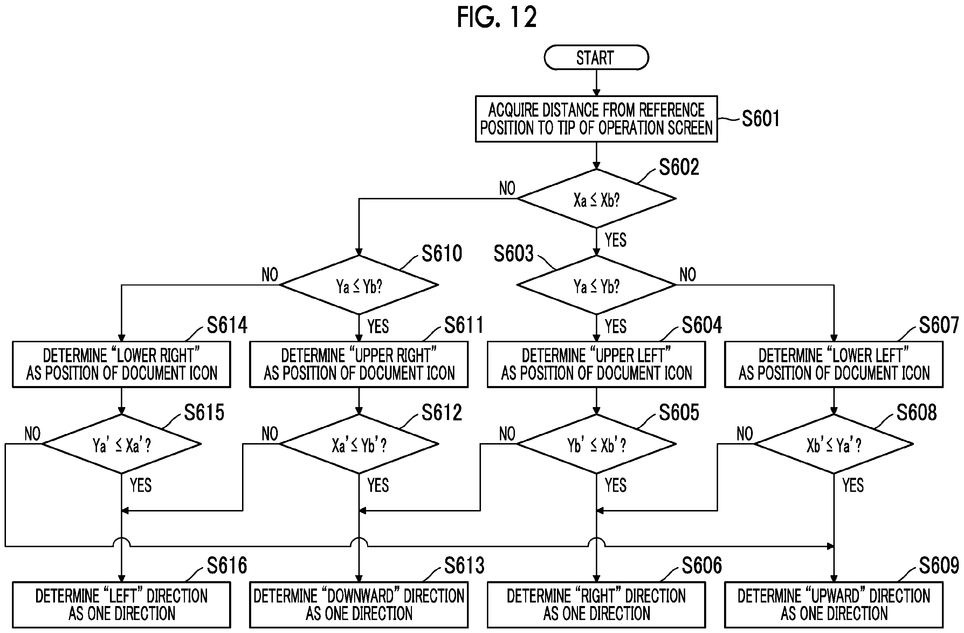

In a case where the display instruction button 411a is not designated (NO in step S503), the process waits until the display instruction button 411a is designated. In a case where the display instruction button 411a is designated (YES in step S503), the display control unit 103 determines one direction for displaying the confirmation image 420, based on a distance from the document icon 410a determined by the distance determination unit 102 to an end of the operation screen 400 in the up-down direction and the right-left direction (step S504). A procedure of determining one direction for displaying the confirmation image 420 based on the determination of the distance determination unit 102 will be described in detail below with reference to Figs. 11 and 12.

Subsequently, the display control unit 103 secures an area from the predetermined specific area 416 determined on the document icon 410a to an end of the operation screen 400 in one direction as the display area 421 for displaying the confirmation image 420 (step S505).

Fig. 6A illustrates an example of the display area 421 in a case where a right direction is determined as one direction in step S504. In the present exemplary embodiment, the display instruction button 411a is displayed in association with a specific area, and an area from the display instruction button 411a to an end of the operation screen 400 in one direction is the display area 421. More specifically, a rectangular area determined by a distance X from the display instruction button 411a to an end of the operation screen 400 in the right direction and a width Y of the operation screen 400 in the up-down direction is secured as the display area 421.

In Figs. 6A to 9, this display area 421 is indicated by a broken line.

Further, Fig. 6B illustrates an example of the display area 421 in a case where the downward direction is determined as the one direction in step S504. In this case, the display control unit 103 secures a rectangular area determined by a distance Y from the display instruction button 411a to an end of the operation screen 400 in the downward direction and a width X of the operation screen 400 in the right-left direction as the display area 421.

In this manner, the display control unit 103 secures a rectangular area determined by the distance from the specific area to the end of the operation screen 400 in one direction and the width of the operation screen 400 in a direction intersecting with the one direction as the display area 421.

Next, the display control unit 103 determines a size for displaying the confirmation image 420a based on a size of the secured display area 421 (step S506). More specifically, in the display area 421, which is an area from the specific area to the end of the operation screen 400 in one direction, a display magnification of the confirmation image 420a is determined so that the entire confirmation image 420a is displayed in the largest size.

In the present exemplary embodiment, the display magnification of the confirmation image 420a is determined so that the entire confirmation image 420a can be displayed in consideration of margins Ma and Mb in the display area 421 in the up-down direction and right-left direction. This margin is a margin provided along four sides inside the display area 421, and the confirmation image 420a is displayed in a portion excluding the margins from the display area 421. As illustrated in Fig. 9, which will be described below, in another exemplary embodiment, it is possible to perform control so that the confirmation image 420a can be displayed on the entire display area 421 without providing this margin.

In Figs. 6A to 8B, the portion obtained by excluding the margin from the display area 421 is indicated by an alternate long and short dash line.

For example, in a case of displaying the vertically long confirmation image 420a in the display area 421, the display control unit 103 calculates a display magnification at which the width Y - 2Ma, which is obtained by excluding the margin Ma in the up-down direction from a height Y of the display area 421 and the height of the confirmation image 420a coincide with each other, as a temporary display magnification. A width of the confirmation image 420a at this temporary display magnification is compared with the width X - 2Mb, which is obtained by excluding the margin Mb in the right-left direction from the width X of the display area 421. In a case where the width of the confirmation image 420a at the temporary display magnification is equal to or less than X - 2Mb, the entire confirmation image 420a can be displayed, so that the calculated temporary display magnification is determined as the size for displaying the confirmation image 420a. Further, in a case where the width of the confirmation image 420a at the temporary display magnification is more than the X - 2Mb, at least a part of the confirmation image 420a protrudes, so that a display magnification at which the width of the confirmation image 420a and X - 2Mb coincide with each other is recalculated, and is determined as the size for displaying the confirmation image 420a.

Further, for example, in a case of displaying the horizontally long confirmation image 420a in the display area 421, the display control unit 103 calculates a display magnification at which the width X - 2Mb, which is obtained by excluding the margin Mb in the right-left direction from the width X of the display area 421 and the width of the confirmation image 420a coincide with each other, as the temporary display magnification. The width of the confirmation image 420a at this temporary display magnification is compared with the width Y - 2Ma, which is obtained by excluding the margin Ma in the up-down direction from the height Y of the display area 421. In a case where the height of the confirmation image 420a at the temporary display magnification is equal to or less than Y - 2Ma, the calculated temporary display magnification is determined as the size for displaying the confirmation image 420a. In a case where the height of the confirmation image 420a at the temporary display magnification is more than Y - 2Ma, the display magnification at which the width of the confirmation image 420a and X - 2Mb coincide with each other is recalculated and determined as the size for displaying the confirmation image 420a.

Further, in step S507, the display control unit 103 determines a position for displaying the confirmation image 420a, based on a position of the specific area 416.

For example, as illustrated in Fig. 7A, in a case where one direction is the right direction and the width of the confirmation image 420a is less than X - 2Mb at a display magnification in which Y - 2Ma and the height of the confirmation image 420a coincide with each other, margins are generated in the right-left direction of the confirmation image 420a. In this case, the display control unit 103 determines a position close to the specific area 416 as the position for displaying the confirmation image 420a. That is, in an area illustrated by the alternate long and short dash line in Fig. 7A, the confirmation image 420a is controlled to be displayed in a left-justified manner. Further, as illustrated in Fig. 7B, in a case where the one direction is the downward direction, and the height of the confirmation image 420a at the display magnification at which X - 2Mb and the width of the confirmation image 420a coincide with each other is less than Y - 2Mb, margins are generated in the up-down direction of the confirmation image 420a. In this case, the display control unit 103 determines a position close to the specific area 416 as the position for displaying the confirmation image 420a. That is, in an area illustrated by the alternate long and short dash line in Fig. 7B, the confirmation image 420a is controlled to be displayed in a top-justified manner.

In this manner, in a case where a margin is generated in a direction parallel to the one direction, the display control unit 103 controls so that the confirmation image 420a is displayed closer to the specific area 416.

Further, for example, as illustrated in Fig. 8A, in a case where one direction is the right direction and the height of the confirmation image 420a at a display magnification in which X - 2Mb and the width of the confirmation image 420a coincide with each other is less than Y - 2Ma, margins are generated in the up-down direction. In this case, between ends of the operation screen 400 in the up-down direction, the display control unit 103 determines a position closer to the end in the upward direction closer to the specific area 416 as a position for displaying the confirmation image 420a. That is, in an area illustrated by the alternate long and short dash line in Fig. 8B, the confirmation image 420a is controlled to be displayed in a top-justified manner.

In this manner, in a case where a margin is generated in a direction orthogonal to the one direction, between the ends of the operation screen 400 in the orthogonal direction, the display control unit 103 controls the confirmation image 420a to be displayed closer to the end closer to the specific area.

As described above, by controlling the position at which the confirmation image 420a is displayed based on the position of the specific area, it becomes easy to understand a correspondence between the instruction image such as the document icon 410a and the displayed confirmation image 420a.

Further, for example, as illustrated in Fig. 8B, in a case where one direction is the up-down direction and the width of the confirmation image 420a is less than Y - 2Ma, margins are generated in the right-left direction. In this case, the display control unit 103 may be configured to determine the position for displaying the confirmation image 420a at a center in the right-left direction.

Next, the confirmation image output unit 105 takes out the confirmation image 420a from the image acquisition unit 106, and outputs the confirmation image 420a to the display unit 40 to display the confirmation image 420a in the one direction, in the size, and at the position determined in steps S504, S506, and S507 (step S508) . In the example in Fig. 5B, the confirmation image 420a is displayed in the right direction of the document icon 410a, in the size at which the height of the confirmation image 420a and Y - 2Ma are equal to each other, and at the position close to the specific area (the display instruction button 411a).

As illustrated in Fig. 5B, the confirmation image 420a may be displayed to be superimposed on at least a part of the other document icons 410b and 410c or toolbar 430 displayed on the operation screen 400.

Further, the confirmation image 420a may be displayed to be superimposed on at least a part of the document icon 410a depending on the direction or the size, the position for displaying the confirmation image 420a, with or without the margin or the size of the display area 421, and the like. For example, as illustrated in Fig. 9, in a case where the specific area 416 (the display instruction button 411a) is located in the upper right corner portion of the document icon 410a and one direction is the left direction, the display control unit 103 displays the confirmation image 420a to be superimposed on a part of the document icon 410a and not to be superimposed on the display instruction button 411a.

Fig. 9 illustrates a display example in a mode in which a margin is not provided in the display area 421. Therefore, the confirmation image 420a is displayed in a size at which the height of the confirmation image 420a and the width Y of the display area 421 in the up-down direction coincide with each other.

In this manner, the confirmation image 420a may be displayed at a position at which the confirmation image 420a is superimposed on at least a part of the document icon 410a. With this configuration, as compared with a case where the confirmation image is displayed at a position at which the confirmation image is not superimposed on the document icon 410a, it is possible to increase the display area 421 secured for displaying the confirmation image 420a.

Further, regardless of a case where the display instruction button 411a is displayed in association with the specific area 416 as in the present exemplary embodiment or a case where the display instruction button 411a is displayed without being associated with the specific area 416, the confirmation image 420a may be displayed at a position at which the confirmation image 420a is not superimposed on the display instruction button 411a on the document icon 410a. With such a configuration, the user can easily recognize a document which the user operates with a display instruction button. In a case where the display instruction button 411a is changed to the maintenance instruction button 412a, the maintenance instruction button 412a becomes easier to operate.

Subsequently, the instruction button output unit 104 outputs and displays the maintenance instruction button 412 to the display unit 40 (step S509). The maintenance instruction button 412 accepts that the display of the confirmation image 420 is set to the display maintenance state. For example, in a case where the display instruction button 411a illustrated in Fig. 5B is designated and the confirmation image 420a is displayed, the display instruction button 411a is changed to the maintenance instruction button 412a illustrated in Fig. 10 and displayed.

Subsequently, the operation determination unit 101 determines whether or not the maintenance instruction button 412 is designated (step S510). In the present exemplary embodiment, the operation determination unit 101 determines, for example, a click operation on the maintenance instruction button 412 as designation on the maintenance instruction button 412.

In a case where the maintenance instruction button 412a is not designated in this step S510 (NO in step S510), the process waits until the maintenance instruction button 412a is designated. In a case where the maintenance instruction button 412a is designated (YES in step S510), the display control unit 103 shifts to the display maintenance state (step S511). In the example illustrated in Fig. 10, after the maintenance instruction button 412a is designated by a click operation, the display of the confirmation image 420a is in the display maintenance state, and the display of the confirmation image 420a is maintained even in a state in which the cursor 200 is not located over the display instruction button 411a or the maintenance instruction button 412a.

Here, a scroll operation or the like may be performed over the operation screen 400 in the display maintenance state, and the document icon 410a may be moved. In the present exemplary embodiment, even in a case where the document icon 410a is moved, the size and the position of the confirmation image 420a maintain the settings when shifting to the display maintenance state. For example, as illustrated in Fig. 10, in a case where the document icon 410a shifts to the display maintenance state while the document icon 410a is at a position A, even in a case where the document icon 410a then moves to a position B, the size and position of the confirmation image 420a are not changed.

Next, the operation determination unit 101 determines whether or not an operation of canceling the display maintenance state is performed (step S512). The operation determination unit 101 according to the present exemplary embodiment determines, for example, performing a click operation at a position other than the display area 421 or a click operation on the maintenance instruction button 412a again, as the operation of canceling the display maintenance state. In a case where the canceling operation is not performed (NO in step S512), the display maintenance state is continued. In a case where the canceling operation is performed (YES in step S512), the display control unit 103 cancels the display maintenance state of the confirmation image 420a (step S513) .

The process of displaying the confirmation image 420a is completed according to the above processing procedure.

As described above, the image display apparatus 1 according to the present exemplary embodiment determines one direction according to a distance from the document icon 410a to ends of the operation screen 400 in the up-down direction and right-left direction, and controls the confirmation image 420a to be displayed in the one direction from the specific area 416 on the document icon 410a, in a case where the display of the confirmation image 420a is instructed from an operation of the user.

Although Figs. 2 and 5A to 10 and the like illustrate an example in which the confirmation image 420a is displayed larger than the corresponding document icon 410a, in a case where the operation screen 400 is small, the confirmation image 420a may be displayed smaller than the document icon 410a.

### [Procedure to Determine One Direction]

Next, a procedure of determining one direction will be described in detail with reference to Figs. 11 and 12.

Fig. 11 is an example of the operation screen 400 for explaining the procedure of determining the one direction. Further, Fig. 12 is a flowchart illustrating an example of the procedure of determining the one direction.

Here, as illustrated in Fig. 11, a distance from a reference position 415a at an upper left corner portion of the document icon 410a to an end of the operation screen 400 in the left direction is defined as Xa, and a distance from the reference position 415a to an end of the operation screen 400 in the upward direction is defined as Ya. Further, a distance from a reference position 415b at a lower right corner portion of the document icon 410a to an end of the operation screen 400 in the right direction is defined as Xb, and a distance from the reference position 415b to an end of the operation screen 400 in the downward direction is Yb.

Further, a distance from the predetermined specific area 416 on the document icon 410a to the end of the operation screen 400 in the left direction is defined as Xa', a distance from the predetermined specific area 416 to the end in the right direction is defined as Xb' , a distance from the predetermined specific area 416 to the end in the upward direction is defined as Ya', and a distance from the predetermined specific area 416 to the end in the downward direction is defined as Yb'. In the present exemplary embodiment, the display instruction button 411a is displayed in association with the specific area 416. As illustrated in Fig. 11, the distances from the display instruction button 411a to the ends of the operation screen 400 in the right-left direction and up-down direction are Xa' , Xb', Ya', and Yb'.

Further, in the following description, for convenience, the operation screen 400 may be divided into four areas of "upper left", "lower left", "upper right", and "lower right". As illustrated in Fig. 11, the "upper left", the "lower left", the "upper right", and the "lower right" respectively correspond to areas divided by a broken line that divides the operation screen 400 into two equal parts in the right-left direction and a broken line that divides the operation screen 400 into two equal parts in the up-down direction.

First, the distance determination unit 102 acquires the distances Xa, Ya, Xb, and Yb from the reference positions 415a and 415b of the document icon 410a to the ends of the operation screen 400 (step S601).

Next, in step S602, the distance determination unit 102 determines whether or not Xa ≤ Xb is satisfied. In a case of Xa ≤ Xb (YES in step S602), the process proceeds to step S603 to determine whether or not Ya ≤ Yb is satisfied. In a case of Ya ≤ Yb (YES in step S603), it is determined that the document icon 410a is in the "upper left" of the operation screen 400 (step S604) .

Further, in step S605, regarding the distance Xb' from the specific area 416 to the end of the operation screen 400 in the right direction and the distance Yb' from the specific area 416 to the end in the downward direction, the distance determination unit 102 determines whether or not Yb' ≤ Xb' is satisfied. In a case of Yb' ≤ Xb' (YES in step S605), the display control unit 103 determines that the one direction is the "right" direction (step S606) . In a case where Yb' ≤ Xb' is not satisfied (Yb'> Xb') (NO in step S605), the display control unit 103 determines the one direction is the "downward" direction (step S613).

In a case of Ya ≤ Yb is not satisfied in step S603 (NO in step S603), the distance determination unit 102 determines that the document icon 410a is in the "lower left" of the operation screen 400 (step S607).

Next, in step S608, it is determined whether or not Xb'≤ Ya' is satisfied. In a case of Xb'≤ Ya' (YES in step S608), the display control unit 103 determines that the one direction is the "upward" direction (step S609). In a case where Xb' ≤ Ya' is not satisfied (Xb' > Ya') (NO in step S608), the display control unit 103 determines that the one direction is the "right" direction (step S606).

Further, in a case where Xa ≤ Xb is not satisfied (Xa > Xb) (NO in step S602), the process proceeds to step S610 to determine whether or not Ya ≤ Yb is satisfied. In a case of Ya ≤ Yb (YES in step S610), it is determined that the document icon 410a is in the "upper right" of the operation screen 400 (step S611).

In step S612, it is determined whether or not Xa'≤ Yb' is satisfied. In a case of Xa'≤ Yb' (YES in step S612), the display control unit 103 determines that the one direction is the "downward" direction (step S613). In a case where Xa'≤ Yb' is not satisfied (Xa'> Yb') (NO in step S612), the display control unit 103 determines that the one direction is the "left" direction (step S616).

In a case where Ya ≤ Yb is not satisfied (Ya> Yb) (NO in step S610), the distance determination unit 102 determines that the document icon 410a is in the "lower right" of the operation screen 400 (step S614).

In step S615, it is determined whether or not Ya' ≤ Xa' is satisfied. In a case of Ya' ≤ Xa' (YES in step S615), the display control unit 103 determines that the one direction is the "left" direction (step S616). In a case where Ya' ≤ Xa' is not satisfied (Ya' > Xa') (NO in step S615), the display control unit 103 determines that the one direction is the "upward" direction (step S609).

With the above procedure, the process of determining the one direction is completed.

In the present exemplary embodiment, based on the distances Xa, Xb, Ya, and Yb from the reference positions 415a and 415b to the ends of the operation screen 400, the position of the document icon 410a is determined. Further, any two distances among the distances Xa', Xb', Ya', and Yb' from the specific area 416 to the ends of the operation screen 400 are compared with each other to determine one direction. In another exemplary embodiment, the distances Xa, Xb, Ya, and Yb may simply be compared and a direction corresponding to the largest distance may be determined as the one direction. Further, for example, the distances Xa', Xb', Ya', and Yb' may be simply compared, and a direction corresponding to the largest distance may be determined as the one direction.

### [Modification Example 1 of Procedure of Determining One Direction]

In the present exemplary embodiment described above, the predetermined specific area 416 and the two reference positions 415a and 415b different from the specific area 416 are provided on the document icon 410a. Based on the distance from the specific area 416 to the ends of the operation screen 400 and the distance from the reference positions 415a and 415b to the ends of the operation screen 400, one direction for displaying the confirmation image 420a is determined.

In Modification Example 1 of the procedure of determining the one direction, a reference position 415c is provided inside the specific area 416, and one direction is determined based on a distance from the reference position 415c to an end of the operation screen 400.

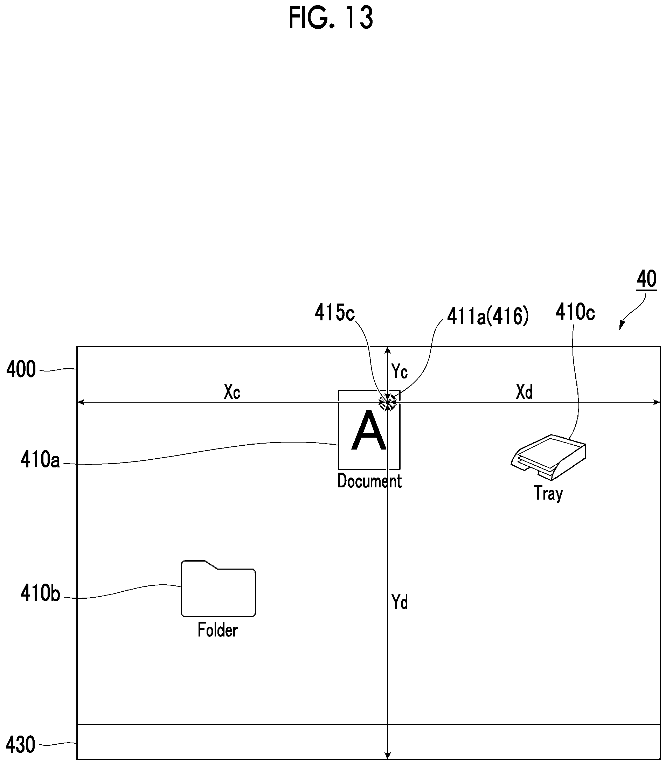

Fig. 13 is a diagram illustrating Modification Example 1 of the procedure of determining the one direction.

In Fig. 13, the display instruction button 411a is displayed in association with the specific area 416, and the reference position 415c is further provided in the specific area 416. Also in this case, based on distances Xc, Xd, Yc, and Yd from the reference position 415c to ends of the operation screen 400 in the up-down direction and the right-left direction, it is determined in which of "upper left", "lower left", "upper right", and "lower right" areas of the operation screen 400 the document icon 410a is located. Distances from the specific area 416 to the end of the operation screen 400 in the two directions determined from the position of the document icon 410a are compared with each other, so that it is possible to determine a direction having a larger distance as the one direction. Further, it is possible to simply compare the distances Xc, Xd, Yc, and Yd, and determine a direction corresponding to the largest distance as the one direction.

As illustrated in Fig. 13, the reference position 415c is provided in the specific area 416, and the display instruction button 411a is displayed in association with the specific area 416, so that the user can easily predict a position and a size of the confirmation image 420a.

### [Modification Example 2 of Procedure of Determining One Direction]

Next, in Modification Example 2 of the procedure of determining the one direction, the one direction is determined based on a distance from the specific area 416 to an end of the operation screen 400 without providing a reference position.

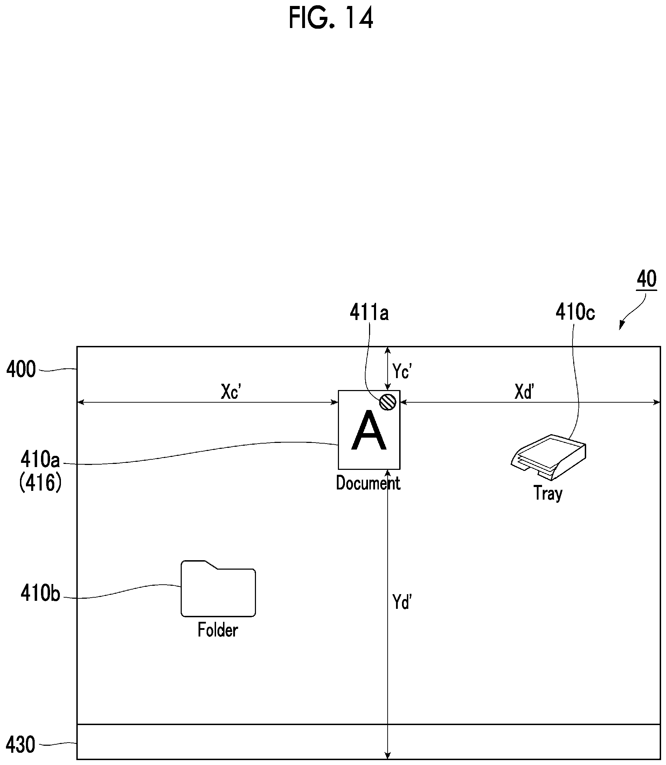

Fig. 14 is a diagram illustrating Modification Example 2 of the procedure of determining the one direction.

In Modification Example 2, the specific area 416 is defined so as to correspond to an area in which the document icon 410a is displayed. In this case, for example, distances Xc', Xd', Yc', and Yd' from ends of the document icon 410a in the up-down direction and the right-left direction to ends of the operation screen 400 in the same direction are compared with each other, so that it is possible to determine a direction corresponding to the largest distance as the one direction.

As described above, a method of obtaining the distance from the instruction image such as the document icon 410a to the end of the operation screen 400, which is used to determine the one direction, can have various modes. More specifically, a distance or the like from each side of the instruction image in the up-down direction and right-left direction, a predetermined specific area on the instruction image, a reference position predetermined on the instruction image, or the like to the end of the operation screen 400 in the up-down direction and right-left direction is obtained.

In the present exemplary embodiment described above, the example is illustrated in which the entire confirmation image 420a is displayed in the maximum size determined by the distance from the reference position 415 or the specific area 416 to the end of the operation screen 400. Here, for example, a prototype image that is a prototype of the confirmation image 420a may be a small image such as data obtained by scanning a business card, so a width and a height of the display area 421 may be larger than this prototype image. At this time, the confirmation image 420a is displayed in a size exceeding a size appropriate for confirming the document icon 410a, and an operation of the user on the operation screen 400 may be hindered.

Therefore, the size of the displayed confirmation image 420a may be determined based on a size of the prototype image which is the prototype of the confirmation image 420a. For example, in the process of determining the size for displaying the confirmation image 420a, it is possible to acquire the size (width and height) of the prototype image from pixel information or the like, and to set the size as an upper limit of the size (width and height) of the displayed confirmation image 420a.

Further, in the present exemplary embodiment, by designating the display instruction button 411a and the maintenance instruction button 412a, the confirmation image 420a is displayed or the display is shifted to the display maintenance state, and the present exemplary embodiment is not limited thereto. The display of the confirmation image 420a or the instruction to shift to the display maintenance state may be performed by another operation using a pointing device such as a mouse, or another user operation such as a key input operation.

The process performed by the image display apparatus 1 according to the present exemplary embodiment is prepared, for example, as a program such as application software. The program can be provided by a communication section as well as provided by being stored in a recording medium such as a CD-ROM or the like.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 1:: image display apparatus
- 10:: arithmetic processing unit
- 20:: input unit
- 30:: secondary storage unit
- 40:: display unit
- 50:: communication unit
- 101:: operation determination unit
- 102:: distance determination unit
- 103:: display control unit
- 104:: instruction button output unit
- 105:: confirmation image output unit
- 106:: image acquisition unit
- 410, 410a, 410b, 410c:: document icon
- 411, 411a:: display instruction button
- 412, 412a:: maintenance instruction button
- 416:: specific area
- 421:: display area

## Claims

1. An information processing apparatus comprising:
a processor configured to:
display an instruction image for accepting an instruction of a user on an operation screen for accepting an operation of the user; and
in a case where the user performs an operation of instructing to display a confirmation image for confirming information related to the instruction image, determine one direction based on a distance from the instruction image to ends of the operation screen in an up-down direction and a right-left direction, and perform control so that the confirmation image is displayed in the one direction from a predetermined specific area on the instruction image.

2. The information processing apparatus according to claim 1, wherein the processor is configured to:
perform control so that the entire confirmation image is displayed in an area from the specific area to the end in the one direction.

3. The information processing apparatus according to claim 1 or 2,
wherein the one direction is a direction toward one end at which a distance from the instruction image to the end of the operation screen in the up-down direction and the right-left direction has a largest value.

4. The information processing apparatus according to claim 2, wherein the processor is configured to:
perform control so that the confirmation image is displayed in a largest size in the area from the specific area to the end in the one direction.

5. The information processing apparatus according to claim 1 or 2, wherein the processor is configured to:
control a size for displaying the confirmation image by using a size of a prototype image that is a prototype of the confirmation image, as an upper limit.

6. The information processing apparatus according to claim 1 or 2, wherein the processor is configured to:
determine a position for displaying the confirmation image based on a position of the specific area on the operation screen.

7. The information processing apparatus according to claim 6, wherein the processor is configured to:
perform control so that the confirmation image is displayed closer to the specific area.

8. The information processing apparatus according to claim 6, wherein the processor is configured to:
display the confirmation image closer to an end at which a distance to the specific area is closer, among the ends of the operation screen in a direction orthogonal to the one direction.

9. The information processing apparatus according to any one of claims 6 to 8, wherein the processor is configured to:
perform control so that the confirmation image is displayed to be superimposed on at least a part of the instruction image.

10. The information processing apparatus according to claim 1 or 2, wherein the processor is configured to:
in a case where the user performs a predetermined operation, perform control so that the confirmation image is in a display maintenance state in which the display of the confirmation image is maintained, and
in the display maintenance state, even in a case where a position of the instruction image is changed, perform control so that a size and a position of the confirmation image are not changed.

11. The information processing apparatus according to claim 1 or 2, wherein the processor is configured to:
display a specific image that does not completely cover the instruction image on the instruction image in correspondence with the specific area.

12. The information processing apparatus according to claim 11,
wherein the processor is configured to:
determine the one direction based on a distance from a predetermined reference position on the instruction image to the ends of the operation screen in the up-down direction and the right-left direction, and
the reference position is present in the specific area.

13. The information processing apparatus according to claim 1 or 2,
wherein the specific area is an area in which the instruction image is displayed.

14. A program causing a computer to realize:
a function of display an instruction image on an operation screen for accepting an operation by a user; and
a function of determining, in a case where the user performs an operation of instructing to display a confirmation image for confirming information related to the instruction image, one direction based on a distance from the instruction image to ends of the operation screen in an up-down direction and a right-left direction, and performing control so that the confirmation image is displayed in the one direction from a predetermined specific area on the instruction image.

15. An information processing method comprising:
displaying an instruction image for accepting an instruction of a user on an operation screen for accepting an operation of the user; and
determining, in a case where the user performs an operation of instructing to display a confirmation image for confirming information related to the instruction image, one direction based on a distance from the instruction image to ends of the operation screen in an up-down direction and a right-left direction, and performing control so that the confirmation image is displayed in the one direction from a predetermined specific area on the instruction image.
